**Europäisches Patentamt**

**European Patent Office**

**Office européen des brevets**

(19)

(11) Veröffentlichungsnummer: **0 018 623**
**B1**

# EUROPÄISCHE PATENTSCHRIFT

(12)

(45) Veröffentlichungstag der Patentschrift:
**12.01.83**

(51) Int. Cl.³: **C 25 B 1/26**, F 25 J 3/06

(21) Anmeldenummer: **80102309.4**

(22) Anmeldetag: **29.04.80**

(54) Verfahren zur Flüssigchlorgewinnung.

(30) Priorität: **04.05.79 DE 2917974**

(43) Veröffentlichungstag der Anmeldung:
**12.11.80 Patentblatt 80/23**

(45) Bekanntmachung des Hinweises auf die Patenterteilung:
**12.01.83 Patentblatt 83/2**

(84) Benannte Vertragsstaaten:
**AT BE CH DE FR GB IT LI NL SE**

(56) Entgegenhaltungen:
**DE-A-2 348 889**
**DE-A-2 547 594**
**GB-A-1 125 519**
**US-A-3 052 612**
**US-A-3 410 099**

(73) Patentinhaber: **HOECHST AKTIENGESELLSCHAFT,**
**Postfach 80 03 20, D-6230 Frankfurt/Main 80 (DE)**

(72) Erfinder: **Bergner, Dieter, Dr., Im Stückes 8a,**
**D-6233 Kelkheim (Taunus) (DE)**
Erfinder: **Hannesen, Kurt, An der Ziegelei 32,**
**D-6233 Kelkheim (Taunus) (DE)**
Erfinder: **Müller, Wolfgang, Drei Linden Strasse 33,**
**D-6232 Bad Soden am Taunus (DE)**
Erfinder: **Schulte, Wilfried, Am Forsthaus 2,**
**D-6238 Hofheim am Taunus (DE)**

ACTORUM AG

## Verfahren zur Flüssigchlorgewinnnung

Die Erfindung betrifft ein Verfahren zur Gewinnung von flüssigem Chlor aus gasförmigem Chlor, das bei der Elektrolyse einer wässerigen Alkalichloridlösung anfällt.

Es ist bekannt, dass bei der Elektrolyse von wässerigen Alkalichloridlösungen Chlor anfällt, das anschliessend gereinigt und verflüssigt wird. Dieses Verfahren wird grosstechnisch in vielen Varianten durchgeführt (vgl. Hund und Zirngiebl in „Winnacker und Küchler", „Chemische Technologie", Bd. 1, München, 1969). Diesen technischen Verfahren ist gemeinsam, dass Chlor mit einem Druck erzeugt wird, der niedriger ist als der Verflüssigungsdruck bei Kühlwassertemperatur. Die Verflüssigung geschieht dabei durch Kompression, durch die Anwendung von Kälte oder durch eine Kombination von Abkühlung und Kompression. Art und Weise der Verflüssigung richten sich im wesentlichen nach den örtlich unterschiedlichen wirtschaftlichen und technischen Gegebenheiten. Häufig wird auch keine Totalverflüssigung des erzeugten Chlors vorgenommen, da wenigstens ein Teil des Chlors in gasförmigem Zustand benötigt wird. Dies bringt den Vorteil mit sich, dass auf diese Weise die von der Elektrolyse stammenden, das Chlor verunreinigenden Gase (Sauerstoff, Stickstoff, Kohlendioxyd, insbesondere aber Wasserstoff) sich nicht anreichern, was bei einer Chlorverflüssigung geschehen würde. Bei einer Totalverflüssigung des Chlors können sonst leicht Chlor/Wasserstoff-Mischungen durchlaufen werden, die im Explosionsbereich liegen. Daher sind bei der Verflüssigung entweder besondere Reinigungsverfahren zur Entfernung des Wasserstoffs erforderlich, oder aber Massnahmen, die es erlauben, den Mischungsbereich zwischen unterer und oberer Explosionsgrenze möglichst ungefährdet zu durchlaufen.

Diese Massnahmen können z.B. darin bestehen, dass die Apparaturen in dem gefährdeten Bereich druckstossfest ausgeführt werden, oder die Weiterleitung einer etwaigen Explosion durch besondere konstruktive Ausbildung der Apparatur (z.B. enge Durchströmungsquerschnitte) verhindert wird. Diese Schwierigkeiten lassen sich umgehen, wenn — wie oben erwähnt — eine Mindestmenge des erzeugten Chlors nach Reinigung und Trocknung gasförmig aus der Verflüssigungsanlage ausgeschleust und dem Verbrauch unmittelbar zugeführt oder auf Hypochlorid verarbeitet wird. Letzteres geschieht meist in einer Anlage, die zur Reinigung chlorhaltiger Abgase und Abluft in jeder Elektrolyseanlage vorhanden ist. Wenn das erzeugte Chlor x % Wasserstoff enthält und bei der Verflüssigung der Gehalt an Wasserstoff im Gasraum auf höchstens y % ansteigen darf, so muss die Relation verflüssigtes Chlor/gasförmig entnommenes Chlor kleiner sein als $(y:x) - 1$.

Es ist als Nachteil aller drucklos betriebenen Alkalichloridelektrolysen anzusehen, dass die Trocknung des Chlors umständlich (hoher spezifischer Verbrauch an Trocknungsmittel, beispielsweise 35 kg $H_2SO_4$/t Chlor) und die Chlorverflüssigung wegen der Notwendigkeit einer Kompressor- und/oder Kälteanlage technisch aufwendig ist.

Es ist zwar schon bekannt, auch bei Drucken von max. 7 bar Alkalichloridelektrolysen zu betreiben, um damit unter anderem die mechanische Kompressionsarbeit bei der Verflüssigung des Chlors zu vermindern (DE-OS Nr. 2729589). Nachteilig ist dabei immer noch die Notwendigkeit, einen Kompressor oder eine Kälteerzeugungsanlage nutzen zu müssen, um das gasförmige Chlor, das die Elektrolysezelle verlässt, zu verflüssigen.

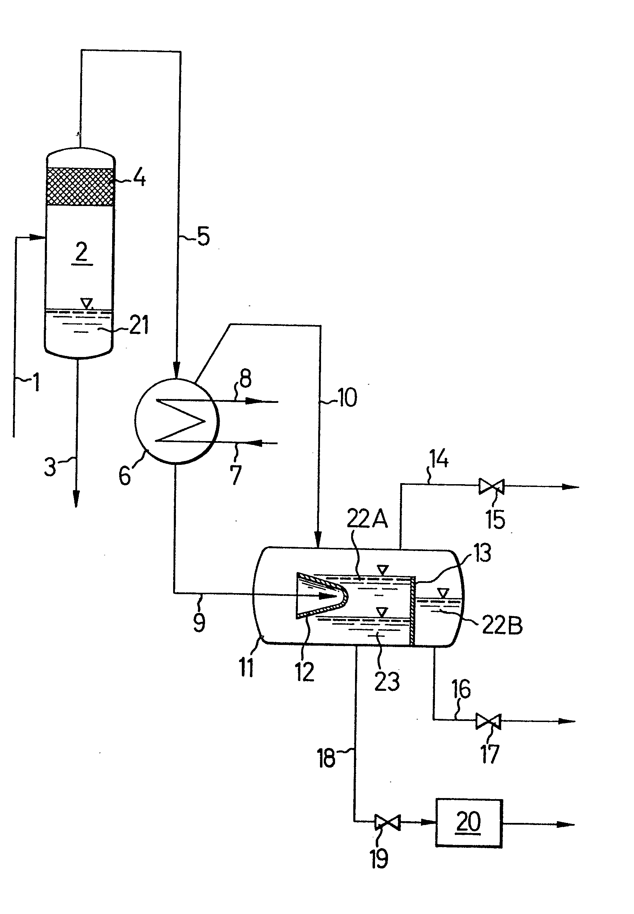

Aus der DE-OS Nr. 2348889 ist es bereits bekannt, wässerige Natriumchloridlösungen bei Drucken von etwa 7-70 kg/cm² zu elektrolysieren. Dabei kann das Chlor an der Anode in gelöster, gasförmiger oder flüssiger Form anfallen. Gasförmig abgeschiedenes Chlor, das heiss und feucht ist, wird zunächst kondensiert und dann getrocknet (Beschreibung von Fig. 6). Es wird jedoch in dieser Stelle nicht angegeben, dass bei der Kondensation eine Mindesttemperatur von ca. 28° C nicht unterschritten werden darf, und dass die bei der Kondensation auftretenden Phasen von flüssigem Chlor und flüssigem Wasser getrennt werden sollen, bevor getrocknet wird. Ein solches Verfahren führt zu keiner Verringerung der benötigten Menge an Trocknungsmittel.

Es bestand daher die Aufgabe, den Aufwand für Trocknung und Verflüssigung des bei der Elektrolyse von Alkalichlorid gasförmig erzeugten Chlors weiter zu verringern.

Es wurde nun ein Verfahren zur Herstellung von flüssigem Chlor gefunden, das von dem Gemisch von Anolyt und wasserdampfgesättigtem gasförmigem Chlor ausgeht, das im Anodenraum einer Elektrolysezelle bei der Elektrolyse einer wässerigen Alkalichloridlösung unter einem Druck von mindestens 8 bar anfällt, wobei man zunächst Anolyt und wasserdampfgesättigtes gasförmiges Chlor voneinander trennt, und man das wasserdampfgesättigte gasförmige Chlor unter einem Druck von mindestens 8 bar durch Abkühlung verflüssigt, dadurch gekennzeichnet, dass man bei der Abkühlung die Temperatur des aus einer flüssigen, wassergesättigten Chlorphase und einer flüssigen, chlorgesättigten Wasserphase bestehenden Kondensats nicht unter 28° C absinken lässt, und man die spezifisch leichte Wasserphase von der spezifisch schwereren Chlorphase abtrennt.

Bei diesem Verfahren erfolgt also die Verflüssigung des gasförmigen Chlors ohne Druckerhöhung. Im Prinzip kann man sogar den Druck vor der Verflüssigung etwas, z.B. von 10 auf 8,5 bar, verringern, wenn die Verflüssigungsanlage nicht für hohe Drucke ausgelegt ist.

Eine Verflüssigung bei Drucken unter 8 bar macht es erforderlich, das Chlor auf Temperaturen unter 28° C abzukühlen. Dabei tritt neben flüssigem Chlor festes Chlorhydrat auf, das die weitere Aufarbeitung sehr erschwert. Dies macht eine aufwendige Trocknung des gasförmigen Chlors vor seiner Verflüssigung erforderlich. Im Anodenraum soll auch der Chlorpartialdruck mindestens 8 bar betragen. Wenn der Verflüssigungsdruck unter 5 bar absinkt, ist sogar eine Verflüssigung mit Kühlwasser von 10° C allein nicht mehr möglich, und man benötigt zusätzlich Kälteerzeugungsanlagen.

Die Trennung der flüssigen Chlorphase von der Wasserphase erfolgt vorzugsweise in einem Trennschichtscheider. Die abgetrennte chlorhaltige Wasserschicht kann in den Elektrolysekreislauf zurückgeführt werden. Das verflüssigte Chlor enthält nur eine geringe Menge Wasser gelöst. Die Trocknung ist daher einfach. Beispielsweise kann man das Wasser an wasserentziehende Mittel, wie z.B. Lithiumchlorid, Calciumchlorid, insbesondere aber Schwefelsäure, binden. Wasser kann auch durch Adsorption an feste Stoffe mit grosser spezifischer Oberfläche gebunden werden (Beispiel: Silikagel und Molekularsiebe).

Bei konstant gehaltenem Anolytspiegel würde durch das freigesetzte Chlor der Druck im System Anodenraum/Verflüssigungsanlage immer weiter ansteigen, sofern lediglich verflüssigtes Chlor abgezogen wird. Man muss daher zur Konstanthaltung des Druckes auch die nicht kondensierbaren Anteile des Gases (zusammen mit Chlor) ausschleusen. Dies ist auch noch aus folgendem Grunde erforderlich: Das Auftreten von Wasserstoff in Chlor lässt sich (sowohl beim Membranzellenverfahren, insbesondere aber beim Amalgamverfahren) nie ganz vermeiden. Sofern nur Chlor (flüssig) entfernt wird, würde der Wasserstoffgehalt des nicht kondensierten Gases immer weiter ansteigen. Die Explosionsgrenze für Wasserstoff im reinen Chlor liegt bei Normaldruck etwas über 6% $H_2$. Aus Sicherheitsgründen verfährt man in den meisten Verflüssigungsanlagen mit einem Wasserstoffgehalt des Abgases von nicht über 4%. Deshalb werden z.B. bei Chlor aus Amalgamanlagen meist nur 80 bis 90% des Chlorgases verflüssigt, und die restlichen 10 bis 20% mit den darin enthaltenen inerten Gasen und dem Wasserstoff als Abchlor anderweitig verwertet (Ullmanns „Encyklopädie der technischen Chemie", Bd. 5, 1954, S. 308). Es ist bevorzugt, die Elektrolyse mit Drucken im Anodenraum von 8 bis 20 bar zu betreiben. Bei Drucken von 8 bis 15 bar sind Verflüssigungstemperaturen von 28 bis 50° C ausreichend. Besonders bevorzugt sind Drucke im Anodenraum zwischen 9 und 12 bar.

Die Temperatur des Anolyten soll über dem Siedepunkt von Chlor beim Arbeitsdruck liegen. Die Anolyttemperatur liegt daher mindestens bei 28° C, vorzugsweise aber über 90° C. Besonders günstig ist es, wenn der Anolyt eine Temperatur aufweist, die über der Siedetemperatur des Anolyten über Atmosphärendruck liegt. Besonders vorteilhaft sind Temperaturen von 105 bis 140° C, insbesondere 110 bis 130° C, im Anolyten.

Die bei der Kondensation des Chlors und des Wasserdampfes freiwerdende latente Wärme kann in manchen Fällen zur Aufwärmung von Zelleneingangsprodukten benutzt werden. Besonders vorteilhaft ist es aber, wenn man diese Wärme für die Eindampfung des Katholyten der Elektrolysezelle benutzt. Eine solche Eindampfung kann beispielsweise unter Vakuum erfolgen, wobei die Kondensationswärme direkt zur Heizung dienen kann; man kann auch den im Vakuum eingeengten und dabei abgekühlten Katholyten anschliessend unter Verwendung der latenten Verdampfungswärme des Chlor/Wasser-Gemisches wieder erwärmen.

Um mit Sicherheit zu verhindern, dass bei der Kondensation des Chlors in den nicht verflüssigten Bestandteilen sich ein so hoher Gehalt an Wasserstoff ansammelt, kann es zweckmässig sein, diesen nicht kondensierten Bestandteilen eine kleine Menge Inertgas zuzusetzen. Dieser Zusatz kann vor, während oder nach der Verflüssigung des Chlors vorgenommen werden. Auf diese Weise kann auch der Druck im System erhöht werden, was besonders wichtig für das Anfahren der Elektrolysezellen ist. Die zugesetzten Gase sollen bei 8 bar und 28° C nicht verflüssigt werden, mit Chlor nicht reagieren und im flüssigen Chlor nur wenig löslich sein. Als Inertgas sind beispielsweise die Edelgase, insbesondere aber Stickstoff und Luft, einsetzbar.

Das bei Temperaturen über 28° C anfallende flüssige Chlor kann nach Abtrennung von der Wasserschicht und Trocknen weiter abgekühlt werden, z.B. mit Hilfe von Kühlwasser auf 20° C.

Es ist vorteilhaft, dass die Löslichkeit von Wasser in flüssigem Chlor nur sehr gering ist. Der Aufwand für die Trocknung von Chlor wird dadurch stark verringert. Es ist ferner vorteilhaft, dass die zu behandelnden unter Druck stehenden Gase kleine Volumina besitzen und, dementsprechend, die für die Kondensation, Phasentrennung und Trocknung erforderlichen Apparaturen nur kleine Dimensionen aufweisen. Die Verflüssigung des Chlors ist nach dem erfindungsgemässen Verfahren ohne Kälteerzeugungsanlage und/oder Kompressor möglich. Schliesslich ermöglicht es die Anwendung höheren Drucks, auch die Zellenbetriebstemperatur zu steigern, was sich auf den Stromverbrauch günstig auswirkt.

Aus der DE-OS Nr. 2745033 ist eine elektrochemische Zelle für die Speicherung von elektrischer Energie bekannt, in der Chlor in flüssiger Form abgeschieden wird. Dieses Chlor wird bei der Entladung wieder verbraucht. Dabei wird es als vorteilhaft angesehen, dass der energetische und apparative Aufwand vermindert wird, weil bei Bildung und Rückreaktion keine Gasphase durchlaufen werden muss. Bei einer typischen Ausführungsform beträgt der Druck 8 bis 10 bar und die Temperatur 30° C. Für eine technische Gewinnung von Chlor bei der Alkalichloridelektrolyse wäre ein solches Verfahren unvorteilhaft, da wegen der geringeren Leitfähigkeit des Elektrolyten der spezifische Energieaufwand bei 30° C deutlich höher ist als bei den in Alkalichloridelektrolysen üblichen Temperaturen von ca. 80° C. Es wäre ferner umständlich, die Verlustwärme der Zelle bei dieser niedrigen Temperatur abzuführen. Die Verlustwär-

me fiele dabei auch in praktisch kaum verwertbarer Form an. Mit höheren Arbeitstemperaturen würden aber automatisch die Arbeitsdrucke rasch ansteigen (Verflüssigungsdruck von Chlor bei 80 bis 100° C:ca. 27 bis 39 bar). Diese nachteilige Koppelung von Arbeitstemperatur und Arbeitsdruck ist bei einer Abscheidung von gasförmigem Chlor (mit späterer Verflüssigung) nicht gegeben.

Die Erfindung wird anhand der Figur näher erläutert:

Das aus den Elektrolysezellen (nicht gezeichnet) kommende Gemisch von Gas und Flüssigkeit (es enthält pro Kilo Sole etwa: 230 g NaCl, 770 g Wasser, 5,74 Normalliter Chlor, 0,002 bis 0,02 Normalliter Wasserstoff und 0,05 bis 0,5 Normalliter Sauerstoff) wird durch Leitung 1 in den Abscheider 2 geleitet. Dort wird vom Gas abgetrenne, aber noch gelöstes Chlor enthaltende, flüssige Sole 21 abgeschieden. Die Sole wird durch Leitung 3 abgezogen. Sie kann anschliessend von gelöstem Chlor befreit und nach Aufsättigung den Zellen wieder zugeführt werden. Wasserdampf und Gase werden beim Hindurchtreten in der Tropfenfängerschicht 4 von mitgerissenen Soletröpfchen befreit und gelangen durch die Leitung 5 in den Kondensator 6, der durch Kühlwasser über die Leitungen 7 und 8 gekühlt wird.

Der Kondensator ist vorteilhafterweise so konstruiert, dass flüssiges Kondensat und nicht kondensierbare Bestandteile durch verschiedene Leitungen abgezogen werden können. Damit wird erreicht, dass der Flüssigkeitsspiegel der flüssigen Phasen im Trennschichtscheider 11 nicht durch Gasblasen beunruhigt wird. Das in 6 erzeugte Kondensat fliesst über die Leitung 9 in den Trennschichtscheider 11, in dem es sich in eine Wasserschicht und eine Chlorschicht trennt. Dabei verhindert die Schikane 12 eine Verwirbelung der flüssigen Phasen. Die in 6 nicht verflüssigten Gase und Dämpfe gelangen über die Leitung 10 in den Gasraum des Trennschichtscheiders 11. Lediglich die spezifisch leichtere wässerige Phase 22 A fliesst über das Überfallwehr 13.

Das Übergeflossene 22 B wird über die Leitung 16 und das Ventil 17 abgezogen. Das Ventil 17 wird durch den Flüssigkeitsstand von 22 A geregelt. Die wässerige Phase 22 B kann unentspannt der Reinsole zugegeben werden (nicht gezeichnet). Unter der wässerigen Schicht 22 A, durch eine Grenzfläche getrennt, befindet sich das flüssige Chlor 23. Es wird über die Leitung 18 und Regelventil 19 zur Trocknungsanlage 20 geleitet. Das Regelventil 19 wird dabei durch die Höhe des Flüssigkeitsspiegels von 23 geregelt.

Der Druck im ganzen System von 8-12 bar wird mit Hilfe des Druckregelventils 15 unter einem vorgegebenen Höchststand gehalten (druckerhöhend wirkt die Gasbildung bei der Elektrolyse). Durch dieses Ventil 15 und Leitung 14 verlassen die nichtkondensierten Gase diesen Anlagenteil. Sie enthalten, den Gleichgewichtsbedingungen entsprechend, neben Chlor (ca. 2 bis 3% der elektrolytisch erzeugten Chlormenge) noch Wasserdampf, etwas Wasserstoff (max. 1%) und Sauerstoff. Dieses Gemisch wird zur Herstellung von Bleichlauge benutzt.

In den meisten Fällen wird eine solche Anlage bei Zellendrucken von 8 bis 12 bar und einer Zellentemperatur von 90 bis 140° C betrieben werden.

Bei einer Chlorerzeugung von 20 t/h, einer Soleeingangskonzentration von 26 Gew.% NaCl und einer Soleauszehrung auf 22 Gew.% NaCl ergibt sich ein Soleumlauf von 825 t/h. Die Sole verlässt den Abscheider, der den Elektrolysezellen nachgeschaltet ist, mit Zellentemperatur. In ihr sind 1200 bis 1600 kg Chlor/h unter Druck gelöst (6 bis 8% der elektrolytisch erzeugten Menge). Die Gase und Dämpfe aus dem Abscheider, bestehend im wesentlichen aus 18 400 bis 18 800 kg/h Chlor und 800 bis 1000 kg Wasserdampf, werden in einem Kondensator bei ca. 35° C zum grössten Teil verflüssigt. Dabei sind ca. 7,4 × 10⁶ J/h Wärme abzuführen. Das Flüssigchlor stellt ca. 90% des elektrolytisch erzeugten Chlors dar. Es wird nach Abtrennung von der Wasserphase durch Extrahieren mit konzentrierter Schwefelsäure getrocknet. Da das Flüssigchlor nur 7 bis 10 kg Wasser/h enthält, wird nur wenig $H_2SO_4$ zum Trocknen gebraucht. Die Wasserphase fällt in einer Menge von ca. 800 bis 950 kg/h an und enthält ca. 35 bis 45 kg/h gelöste Chlor.

## Patentansprüche

1. Verfahren zur Herstellung von flüssigem Chlor aus dem Gemisch von Anolyt und wasserdampfgesättigtem gasförmigem Chlor, das im Anodenraum einer Elektrolysezelle bei der Elektrolyse einer wässerigen Alkalichloridlösung unter einem Druck von mindestens 8 bar anfällt, wobei man zunächst Anolyt und wasserdampfgesättigtes gasförmiges Chlor voneinander trennt, und man das wasserdampfgesättigte gasförmige Chlor unter einem Druck von mindestens 8 bar durch Abkühlung verflüssigt, dadurch gekennzeichnet, dass man bei der Abkühlung die Temperatur des aus einer flüssigen, wassergesättigten Chlorphase und einer flüssigen, chlorgesättigten Wasserphase bestehenden Kondensats nicht unter 28° C absinken lässt, und man die spezifisch leichte Wasserphase von der spezifisch schwereren Chlorphase abtrennt.

2. Verfahren nach Anspruch 1, dadurch gekennzeichnet, dass man die flüssige Chlorphase nach Abtrennung von der Wasserphase trocknet.

3. Verfahren nach Anspruch 2, dadurch gekennzeichnet, dass das im flüssigen Chlor gelöste Wasser mittels konzentrierter Schwefelsäure entfernt wird.

4. Verfahren nach Anspruch 1, dadurch gekennzeichnet, dass der Druck im Anodenraum mit Hilfe geregelten Abzuges der bei der Chlorverflüssigung nicht kondensierten Gase konstant gehalten wird.

5. Verfahren nach Anspruch 1, dadurch gekennzeichnet, dass die Verflüssigung des Chlors bei Temperaturen zwischen ca. 28 und ca. 50° C erfolgt.

6. Verfahren nach Anspruch 5, dadurch gekennzeichnet, dass der Druck im Anodenraum zwischen 9 und 12 bar gehalten wird.

7. Verfahren nach Anspruch 1, dadurch gekennzeichnet, dass die bei der Verflüssigung gebildete chlorhaltige Wasserphase nach Abtrennung von der flüssigen Chlorphase unentspannt in den Elektrolytkreislauf der Alkalichloridelektrolyse zurückgeführt wird.

8. Verfahren nach Anspruch 1, dadurch gekennzeichnet, dass die bei der Kondensation des Chlors und des Wasserdampfs freiwerdende Wärme für die Eindampfung des Katholyten der Elektrolysezelle benutzt wird.

9. Verfahren nach einem der beiden Ansprüche 1 oder 4, dadurch gekennzeichnet, dass man dem bei der Verflüssigung des Chlor nichtkondensierten Gasstrom eine kleine Menge Inertgas zusetzt.

10. Verfahren nach Anspruch 1, dadurch gekennzeichnet, dass die Abtrennung der Wasserphase von der Chlorphase in einem Trennschichtabscheider erfolgt, und dass beide Phasen getrennt und geregelt abgezogen werden.

## Claims

1. A process for the production of liquid chlorine from the mixture of anolyte and steam-saturated gaseous chlorine which is obtained in the anode space of an electrolytic cell in the electrolysis of an aqueous alkali metal chloride solution under a pressure of at least 8 bars, by separating at first the anolyte from the steam-saturated gaseous chlorine and liquefying the steam-saturated gaseous chlorine under a pressure of at least 8 bars by cooling, which comprises maintaining a temperature of at least 28° C of the condensate consisting of a liquid water-saturated chlorine phase and a liquid chlorine-saturated water phase during cooling, and separating the water phase from the chlorine phase which has a heavier specific weight than the water phase.

2. The process as claimed in claim 1, which comprises drying the liquid chlorine phase after separation from the water phase.

3. The process as claimed in claim 2, which comprises eliminating the water dissolved in the liquid chlorine by means of concentrated sulfuric acid.

4. The process as claimed in claim 1, which comprises maintaining the pressure in the anode space constant by way of the regulated elimination of the gases not having condensed in the chlorine liquefaction.

5. The process as claimed in claim 1, which comprises effecting the liquefaction of the chlorine at a temperature of from about 28 to 50° C.

6. The process as claimed in claim 5, which comprises maintaining the pressure in the anode space in the range of from 9 to 12 bars.

7. The process as claimed in claim 1, which comprises recirculating the chlorine-containing water phase having been formed in the liquefaction, after separating it from the liquid chlorine phase, in a non-depressurized state into the electrolyte circulation of the alkali metal chloride electrolysis.

8. The process as claimed in claim 1, which comprises using the heat generated in the condensation of the chlorine and the steam for evaporating the catholyte of the electrolytic cell.

9. The process as claimed in claim 1 or 4, which comprises adding a small amount of inert gas to the gas not having condensed in the liquefaction of the chlorine.

10. The process as claimed in claim 1, which comprises separating the water phase from the chlorine phase in a layer separator, and discharging the two phases separately in a regulated manner.

## Revendications

1. Procédé de production de chlore liquide à partir du mélange d'anolyte et de chlore gazeux saturé de vapeur d'eau, que l'on obtient dans l'espace anodique d'une cellule d'électrolyse lors de l'électrolyse d'une solution aqueuse de chlorure alcalin sous une pression d'au moins 8 bars, procédé selon lequel on sépare tout d'abord l'un de l'autre l'anolyte et le chlore gazeux saturé de vapeur d'eau, et l'on liquéfie par refroidissement le chlore gazeux saturé de vapeur d'eau sous une pression d'au moins 8 bars, procédé caractérisé en ce que, lors du refroidissement, on ne laisse pas tomber au-dessous de 28° C la température du condensat, consistant en une phase de chlore liquide saturée de vapeur d'eau et en une phase aqueuse liquide saturée de chlore, et en ce qu'on sépare la phase aqueuse, à faible poids spécifique, de la phase de chlore à poids spécifique plus élevé.

2. Procédé selon la revendication 1, caractérisé en ce que, après séparation de la phase aqueuse, on sèche la phase de chlore liquide.

3. Procédé selon la revendication 2, caractérisé en ce qu'on élimine, à l'aide d'acide sulfurique concentré, l'eau dissoute dans le chlore liquide.

4. Procédé selon la revendication 1, caractérisé en ce qu'on maintient constante dans l'espace anodique la pression à l'aide d'un soutirage réglé des gaz non condensés lors de la liquéfaction du chlore.

5. Procédé selon la revendication 1, caractérisé en ce que la liquéfaction du chlore s'effectue à des températures comprises entre environ 28 et environ 50° C.

6. Procédé selon la revendication 5, caractérisé en ce qu'on maintient, dans l'espace anodique, la pression entre 9 et 12 bars.

7. Procédé selon la revendication 1, caractérisé en ce que, après séparation de la phase de chlore liquide, on recycle, dans le circuit de l'électrolyte de l'électrolyse de chlorure alcalin, la phase aqueuse, non détendue, contenant du chlore et formée lors de la liquéfaction.

8. Procédé selon la revendication 1, caractérisé en ce qu'on utilise, pour l'évaporation du catholyte des cellules d'électrolyse, la chaleur libérée lors de la condensation du chlore et de la vapeur d'eau.

9. Procédé selon l'une des revendications 1 ou 4, caractérisé en ce qu'on ajoute une faible quantité de gaz inerte au courant de gaz non condensés lors de la liquéfaction du chlore.

10. Procédé selon la revendication 1, caractérisé en ce que la séparation de la phase gazeuse d'avec la phase de chlore s'effectue dans un décanteur-séparateur de couches superposées, et en ce qu'on soutire séparément, et de façon réglée, les deux phases.